# EUROPEAN PATENT SPECIFICATION

(11) **EP 4 338 564 B1**
(45) Date of publication and mention of the grant of the patent: **25.02.2026**
(21) Application number: 23197809.9
(22) Date of filing: 15.09.2023
(51) Int. Cl.: A01C 17/00, A01C 15/00

(54) **FARMING MACHINERY FOR DISTRIBUTING TREATMENT PRODUCTS ON THE GROUND**
LANDWIRTSCHAFTLICHE MASCHINE ZUM VERTEILEN VON BEHANDLUNGSPRODUKTEN AUF DEM BODEN
MACHINE AGRICOLE POUR DISTRIBUER DES PRODUITS DE TRAITEMENT SUR LE SOL

(30) Priority: 16.09.2022 IT 202200019029
(43) Date of publication of application: 20.03.2024
(73) Proprietor: DCM HOLDING SRL, 37030 Roncà (VR) (IT)
(72) Inventor: DAL CERO, Sergio, 37030 Ronca' (VR) (IT)
(74) Representative: Gallo, Luca

(56) References cited:
- EP-A1- 2 404 494
- EP-A1- 2 724 601
- EP-A2- 0 327 143
- US-A1- 2020 000 019

## Description

### Field of application

The present invention regards farming machinery for distributing products for treating terrain, according to the independent claim 1.

The present farming machinery is inserted in the field of agriculture, for example in the field of cultivation of vineyards, orchards and in plots of terrain even of limited dimensions, e.g. one hectare.

In particular, the farming machinery is advantageously intended to be employed for precisely distributing a quantity of products for treating the terrain, such as for example manures, fertilizers, or additives functional for the terrain, e.g. poisons and fungicides.

Therefore, the present machinery is inserted in the industrial field of production of farming machinery pieces for treating a terrain.

### State of the art

Farming machinery pieces are known for spreading treatment products, e.g. manures or fertilizers, on the ground. Such machinery pieces allow automatically distributing a measured metering of product on the ground to be treated during their travel, in particular by exploiting the principle of centrifugal distribution in order to quickly treat even large plots of terrain. For example, such machinery pieces are described in the documents EP 2404494 A1**,** EP 0 327 143 A2 and EP 2724601 A1.

More in detail, such farming machinery pieces are known as centrifugal machinery pieces and are provided with a containment tank for containing the product to be distributed, which is provided with a dispensing opening for allowing the outflow of the product to be distributed, and centrifugal distribution means, adapted to receive the product exiting from the tank in order to distribute it on the ground to be treated.

In particular, the distribution means comprise a spreader plate, placed below the dispensing opening and on which at least one distribution blade is mounted, integral with the spreader plate and actuatable in rotation so as to distribute the product exiting from the containment tank laterally on the ground.

The machinery pieces of known type also comprise a metering plate, which is positioned in front of the dispensing opening of the containment tank and is movable, for example by means of an electric actuator, between different discrete operating positions, in each of which it is placed to partially close the dispensing opening itself, so as to vary the "free" section of the dispensing opening and thus adjust the flow of product dispensed and distributed on the ground.

The metering plate must in fact be placed in the correct operating position so as to obtain the correct flow of product to be distributed on the ground. Such flow must be previously calculated and depends on numerous operating parameters, such as for example the advancing speed of the machinery, the distribution width (or surface width on the ground), the quantity and the physical characteristics of the product to be distributed, the ground type etc.

More in detail, each operating position of the metering plate corresponds with a specific flow of distributed product, such to determine a metering curve position-flow rate determined on the basis of the aforesaid dependence of the flow of product on the position of the metering plate.

The farming machinery pieces described up to now have in practice proven that they do not lack drawbacks. A first drawback is given by the fact that the aforesaid farming machinery pieces have proven to be poorly precise in the metering to be distributed, in particular in the case of reduced advancing speed of the machinery or in the case of reduced metering and work widths.

In addition, the farming machinery of known type have the technical problem of not being able to correctly meter the product to be distributed when there are small variations of the above-reported operating parameters.

Indeed, the sensitivity of the currently known actuator means is not sufficient to move the metering plate by a reduced angle in order to open and/or close the dispensing opening with high sensitivity.

Consequently, the metering curve that is obtained with the metering plate of the machinery pieces of known type is in fact extremely "steep" and therefore imprecise, since a small movement of the linear actuator corresponds with a large movement of the metering plate and hence a high increase of the flow of product distributed on the ground.

Therefore, a further drawback of farming machinery pieces of known type is that these are unsuited to carrying out treatments that are precise and reproducible over time, especially in the event in which the product to be distributed requires low metering (in particular lower than 15 kg/min), such as in the case of fungicides products, or in the case of limited advancing speed (e.g. lower than 8 km/h) or in the case of rows where the quantity of product to be distributed is limited with respect to the open field.

The poor precision of the machinery pieces of known type can on one hand lead to over-metering of the product to be distributed or on the other hand to under-metering the same product, with different risks for the ground and for the cultivation underway, but at any rate with consequences that determine the ineffectiveness of the treatment.

Such drawbacks lead such machinery pieces of known type to be unsuited for modern farming needs, where the increasingly stringent norms oblige compliance with precise requirements on the ground-treatment product metering, in particular in the case of products fungicides and pesticides.

A further drawback is given of course by the fact that, in case of over-metering of the product to be distributed, there is a waste of product and a consequent increase of costs for the user.

In addition, known from document EP 0327143 A2 is farming machinery provided with a metering plate whose open position is determined manually by an operator, by setting the position of a stop pin against which the metering plate abuts when it is in the open position. In order to move the metering plate, the machinery also comprises a single-acting hydraulic actuator, which acts on the metering plate in order to move it into a closed position (in which it obstructs the entire dispensing opening), and a return spring which pushes the metering plate against the stop pin when the actuator is disabled, so as to block the metering plate in the open position. Also the latter machinery of known type nevertheless has at least part of the drawbacks of the other machinery pieces of the prior art described above, not being able to easily ensure a higher metering precision.

### Presentation of the invention

In this situation, the problem underlying the present invention is therefore that of overcoming the drawbacks manifested by the abovementioned solutions of known type by providing farming machinery for distributing treatment products on the ground, which is provided with a high sensitivity in the metering of the product to be distributed.

A further object of the present invention is to provide farming machinery for distributing treatment products on the ground which allows distributing, in a precise and reproducible manner, the aforesaid products, even in the case of low requested metering amounts.

A further object of the present invention is to provide farming machinery for distributing treatment products on the ground which is capable of offering in a completely efficient and versatile manner as a function of the different operating parameters.

A further object of the present invention is to provide farming machinery for distributing treatment products on the ground which is entirely reliable in operation.

A further object of the present invention is to provide farming machinery for distributing treatment products on the ground which is simple and inexpensive to attain.

### Brief description of the drawings

The technical characteristics of the present invention, according to the aforesaid objects, can be seen in the contents of the below-reported claims and the advantages of the same will be more evident in the following detailed description, made with reference to the enclosed figures, which represent a merely exemplifying and non-limiting embodiment of the invention, in which:
- figure 1 shows a top perspective view of the farming machinery, object of the invention;
- figure 2 shows a top perspective view of a detail of the farming machinery, object of the invention, relative to a tank for containment, with several parts removed in order to better illustrate other parts;
- figure 3 shows a bottom perspective view of the tank of figure 2;
- figure 4 shows a sectional view of one detail of the tank of figure 2, with several parts removed in order to better illustrate other parts, relative to closure means and to a dispensing opening, with an adjustment plate in a first position;

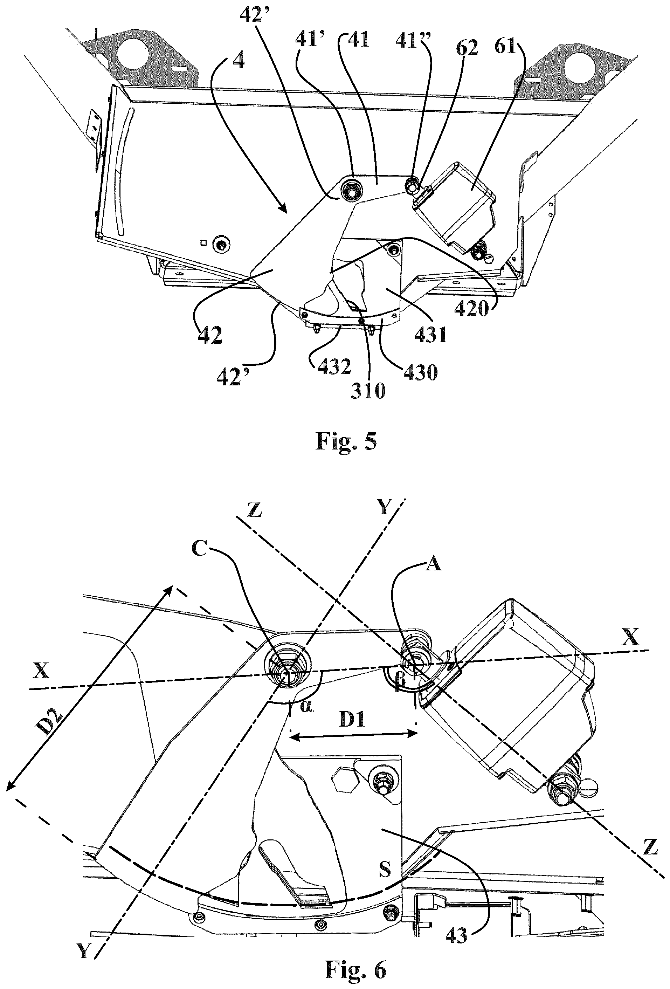

- figure 5 shows a further sectional view of a detail of the tank of figure 1, with an adjustment plate removed and with a metering plate highlighted;
- figure 6 shows a front view of the metering plate of figure 5, according to a first embodiment of the present invention;
- figure 7 shows a further front view of the metering plate of figure 6, withe fixing holes highlighted on a lever arm;
- figure 8 shows a front view of the metering plate of figure 5 with adjustment means highlighted, according to a second embodiment of the present invention;
- figure 9 shows a front view of an embodiment variant of the farming machinery, object of the invention, with the metering plate and the fixing holes of figure 7;
- figure 10 shows a front view of the embodiment variant of the machinery of figure 9, with the metering plate and the adjustment means of figure 8;

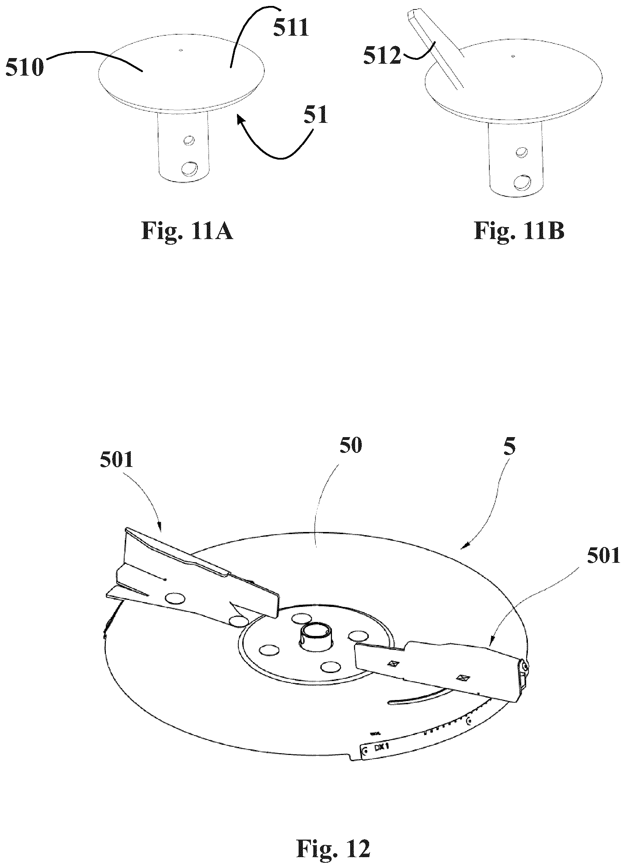

- figures 11A and 11B show a perspective view of a detail of means for distributing the ground treatment product, relative to a mixer body;
- figure 12 shows a perspective view of a further detail of means for distributing the ground treatment product, relative to a spreader plate;

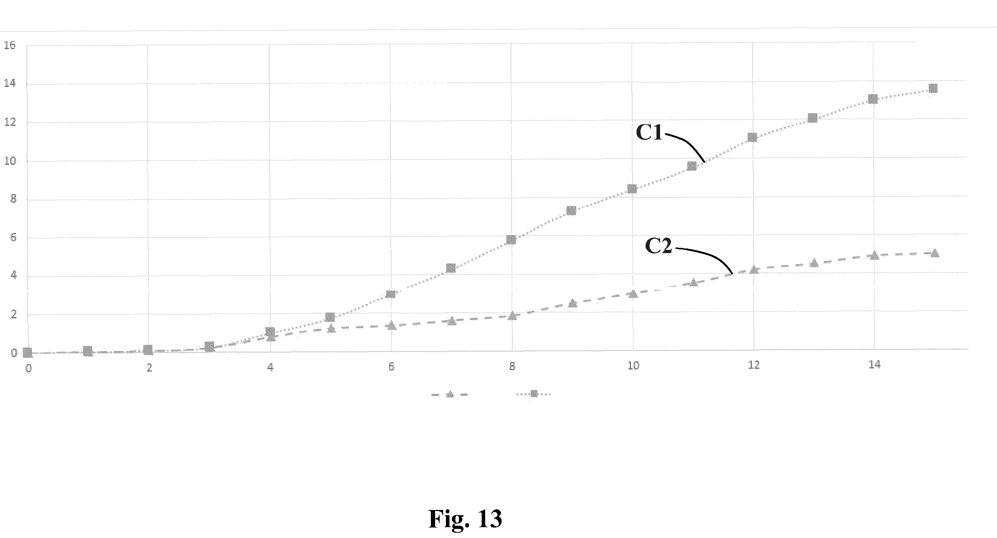

- figure 13 shows a graph on which two metering curves are illustrated for a treatment product to be distributed on a terrain, relative to two first lengths of a lever arm of the metering plate.

### Detailed description of several preferred embodiments

With reference to the enclosed drawings, reference number 1 overall indicates farming machinery for distributing treatment products on the ground, in accordance with the present invention.

In particular, the farming machinery, object of the invention, is advantageously employable for distributing different products for treating the ground, such as for example manures, fertilizers, seeds or functional additives such as poisons and fungicides.

The abovementioned products are advantageously in solid form and can be in the form of granules, pellets etc. as described more in detail hereinbelow.

More in detail, the present machinery 1 is intended to be employed in the farming field, and in particular in the field of cultivation of terrain, both of limited size such as vineyards and orchards, and of larger dimensions such as open fields.

As better described hereinbelow, the machinery 1. object of the invention, is preferably machinery of electronic type, i.e. adapted to be programmed electronically in order to allow high automation of the ground working and thus increase the productivity and efficiency of the machinery itself.

The farming machinery, object of the present invention, is indeed advantageously employable in all those contexts in which it is necessary to have a high metering precision, e.g. in the case of terrain of limited extension (e.g. vineyards or orchards in which the sowing width can also reach 2 meters), or in the event in which it is necessary to spread products with limited metering (preferably lower than 120 kg/ha such as for example poisons or fungicides) or in the event in which it is necessary or desired to move the machinery itself at limited advancing speeds (preferably lower than 8 km/h).

The present farming machinery 1 for distributing treatment products on the ground comprises a support frame 2, preferably metallic, and at least one tank 3, fixed to the support frame 2 and adapted to contain products to be distributed on the ground. The tank 3 is provided with at least one opening 31 for dispensing the products to be distributed.

In particular, the dispensing opening 31 is preferably made on the side of the tank 3, in particular on a lateral wall 33 thereof, which will be described in detail hereinbelow, even if as an alternative the dispensing opening 31 can be made on a lower bottom wall of the same tank 3.

Advantageously, the farming machinery 1 also comprises distribution means 5, mechanically connected to the support frame 2, placed below the dispensing opening 31 of the tank 3 and comprising at least one spreader plate 50 which is intended to receive the dose of the products from the dispensing opening 31 of the tank 3 and is actuatable in rotation in order to distribute the dose of products on the ground.

The farming machinery 1 is also provided with at least one metering plate 4, which comprises a lever arm 41 and a closure arm 42 fixed together, preferably made of a single body, and is mechanically pivoted to the tank 3 at a hinging point C interposed between the lever arm 41 and the closure arm 42.

More in detail hereinbelow by "hinging point" a point or a localized area will be intended, in which the metering plate 4 is hinged to the tank 3, in particular by means of a rotary or roto-translational connection element, for example in a non-limiting manner made by means of a hinge pin.

In particular, the metering plate 4 thus built is rotatably movable around such hinging point C.

The closure arm 42 is movable with respect to the hinging point C along a movement trajectory S.

In particular, the movement trajectory S is preferably extended along an arc of circumference with respect to the hinging point C, preferably along a arc of circumference provided with an extension comprised between 25° and 60°.

Of course, without departing from the protective scope of the present invention, the trajectory S can be extended according to any other trajectory, e.g. a trajectory that can be approximated to a circumference arc, in particular an ellipse arc, or rectilinear.

The closure arm 42 is movable along the aforesaid movement trajectory S between multiple operating positions in which it is placed to at least partially close of the dispensing opening 31. More in detail, the closure arm 42 is advantageously provided with a perimeter edge having at least one shaped section 420 which is placed with the shaped section 420 to at least partially close the dispensing opening 31.

In this manner the metering plate 4 can selectively open and/or close, with its closure arm 42, the dispensing opening 31, respectively increasing or decreasing the metering of the product to be distributed.

According to the idea underlying the present invention, the machinery comprises a first linear actuator 6, which is pivoted to the lever arm 41 and to the tank 3, preferably by means of two distinct hinging eyelets adapted to allow the mutual rotation between the first linear actuator 6, the lever arm 41 and the tank 3.

The first linear actuator 6 is also provided with a first jacket 61 and with a first stem 62, which is extensible with respect to the first jacket 61 along an actuation travel U.

Advantageously, the first stem 62 is hinged to the lever arm 41 and the first jacket 61 is hinged to the tank 3 (as in the examples of the enclosed figures), or vice versa.

In particular, the lever arm 41 has a first hinging eyelet and the first movable stem 62 of the first linear actuator 6 is preferably provided with a second hinging eyelet, concentric with respect to the first eyelet.

According to the invention, the first linear actuator 6 acts on the lever arm 41 at an actuation point A. More in detail, the first linear actuator 6 acts on the lever arm 41 in order to rotate the metering arm 42 around the hinging point C in two opposite rotation senses (clockwise and counterclockwise). Therefore, the first linear actuator 6 can act thrustingly, in order to rotate the metering arm 42 in a first rotation sense, and under traction, in order to rotate the metering arm 42 in a second rotation sense.

In particular, the first and the second hinging eyelet are advantageously connected by means of junction elements, at the actuation point A, in a manner such to allow the mutual rotation of the lever arm 41 with respect to the first stem 62 of the first linear actuator 6 during the actuation of the same.

The first stem 62 is extensible with respect to the first jacket 61 along an actuation travel U in an actuation direction Z transverse to the lever arm 41, in order to move the closure arm 42 along the aforesaid movement trajectory S in different discrete operating positions interposed between a maximum opening position, in which the dispensing opening 31 is substantially free of the metering plate 4, and a maximum closing position, in which the dispensing opening 31 is totally covered by the metering plate 4 in order to substantially prevent the entire dispensing of the product to be distributed.

Advantageously, the first stem 62 is movable along the aforesaid actuation direction Z, along opposite movement senses, of which a first sense determines the thrust of the first linear actuator 6 on the lever arm 42 (in order to rotate it in the first rotation sense), while the second sense determines the traction of the first linear actuator 6 on the same lever arm 42 (in order to rotate it in the second rotation sense).

The ratio Q between the angular movement of the closure arm 42 along the movement trajectory S and the actuation travel U of the first stem 62 of the first linear actuator 6 along the actuation direction Z is smaller than 0.65 °/ mm.

In this manner, farming machinery 1 is obtained that is provided with a high sensitivity in the metering of the product to be distributed. In particular, as mentioned above, following the actuation of the first linear actuator 6 the first stem 62 it is moved by a minimum travel, which corresponds with a reduced rotation of the metering plate 4.

More in detail, with the expression "minimum travel" it is intended the minimum movement of the first stem 62 following the actuation of the first linear actuator 6, which corresponds with the sensitivity of the same first linear actuator 6.

Advantageously, the first linear actuator 6 is movable in extension and in retraction between an extended position and a extended position.

Preferably, the first linear actuator 6 is provided with an active travel, which is smaller than the total travel of the first stem 62 since during an activation travel, in particular, comprised between 1 and 4 mm, in which the first stem 62 is moved from the retracted position, in which it is substantially totally housed in the first jacket 61, towards the extended position, and for a final travel, this too comprised between 1 and 4 mm, in which the first stem 62 is in proximity to the maximum extension thereof, there is no movement of the metering plate 4.

Therefore, for example for a travel of the first stem 62 of 50 mm, the active travel will be comprised between 42 and 48 mm.

For the sake of description simplicity, with the term travel it will be intended the active travel of the actuator.

Such embodiment solution is particularly advantageous in the case of use on electronic machinery, in which the first linear actuator 6 acts on the lever arm 41 as a function of the variation of the operating conditions (e.g. as a function of the speed of the machinery 1 or of the position of the machinery on the field, in particular detected by means of a GPS).

Even if the present machinery 1 is employable in a preferred embodiment as machinery of "electronic" type, and in an alternative embodiment**,** which are not according to the invention, also as "manual" machinery, this was particularly designed for being used in its electronic configuration, in which therefore the lever arm 41 is movable automatically also during the movement of the machinery 1 on the field.

According to the invention, the first linear actuator 6 is an electric actuator, provided with a travel sensitivity of at least 2 mm and preferably of about 0.5 mm.

Therefore, in accordance with the aforesaid preferred embodiment, the first stem 62 of the first linear actuator 6 acts along the actuation direction Z for a minimum travel equal to 0.5 mm, determining a rotation of the metering plate 4 smaller than or equal to 0.3°.

In particular, in the event in which the arc of circumference of the movement trajectory S is extended between 25° and 35°, hence a minimum travel of the first stem 62 corresponds with a movement of the metering plate 4 equal to about 0.4% with respect to the complete arc of circumference that the latter can complete along the movement trajectory S.

Preferably, such ratio is independently met by the position of the metering plate 4 along the movement trajectory S, i.e. by the percentage of dispensing opening 31 already covered. In this manner therefore, even in the case of low metering, i.e. in proximity to the maximum closed position, it is possible to precisely adjust the metering of the product to be distributed.

Advantageously, the ratio between the angular movement of the closure arm 42 and the actuation travel U of the first stem 62 is obtained by means of a specific ratio between the length of the closure arm 42 and the active length of the lever arm 41, described more in detail hereinbelow.

Advantageously, the "active" lever arm 41, intended as the section of lever arm 41 interposed between the hinging point C and the actuation point A, is relatively long with respect to the length of the closure arm 42.

More in detail, the lever arm 41 is extended along a first extension direction X, between a first end 41', placed at the hinging point C and an opposite second end 41".

In particular, the lever arm 41 is provided with an active section provided with a first length D1, measured between the first end 41' thereof (advantageously coinciding with the hinging point C) and the actuation point A in which the first stem 62 of the first linear actuator 6 is hinged, which preferably is placed at the second end 41" of the lever arm 41.

In particular, the first linear actuator 6 is pivoted to the lever arm 41 at the second end 41" of the latter in order to exploit the maximum extension of the lever arm 41 itself, however, as explained more in detail hereinbelow, the first linear actuator 6 can also act at an intermediate point along the first extension direction X.

Advantageously, the closure arm 42 is extended along a second extension direction Y, for a second length D2, between a third end 42' placed at the hinging point C and a fourth end 42" opposite the third end 42'.

In particular, the ratio between the first length D1 and the second length D2 is preferably comprised between 1.5 and 0.45, so as to determine a small angular movement of the closure arm 42 given the same movement of the first stem 62 along the actuation direction Z.

Preferably, the ratio between the first length D1 and the second length D2 is comprised between 0.95 and 0.45, in a manner such that the metering plate 4 is advantageously a class 1 lever of advantageous or indifferent type, in which the power arm, constituted by the lever arm 41, is shorter or at most equal to the resistance arm, constituted by the closure arm 42.

Nevertheless, in an embodiment variant of the present invention, as described more in detail hereinbelow, the lever arm 41 is extensible, and the first length D1 increases in a manner such that the ratio between the first length D1 and the second length D2 also reaches values comprised between 0.95 and 1.5.

Advantageously, the first extension direction X and the second extension direction Y hit each other and together form a first angle α comprised between 100° and 130°.

Of course the width of the first angle α is expressed in absolute value and therefore the first angle α can be extended according to a clockwise or counterclockwise rotation sense depending on the design needs of the machinery 1.

Such width of the first angle α allows positioning the lever arm 41 and the closure arm 42 with respect to each other to partially delimit an operative zone, within which it is possible to easily obtain the trajectory S and position the dispensing opening 31.

Indeed if the first angle α is smaller than 100°, the first linear actuator 6 would be hard to position since it would risk being superimposed on the dispensing opening 31; otherwise, if the first angle α is greater than 130°, a lateral wall 33 of the tank 3 would be necessary with large size, since the closure arm 42 and the lever arm 41 would be nearly aligned with each other along the extension directions X, Y.

Advantageously, the ratio between the actuation travel U of the first linear actuator 6 and the first length D1 of the active section of the lever arm 41 is comprised between 0.45 and 0.6.

Such ratio allows the lever arm 41 to transfer a rotation to the closure arm 42 such to cover the entire trajectory S. It is in fact clear that by lowering the sensitivity of the rotation of the closure arm 42 by means of an elongation of the lever arm 41, one must at any rate ensure an actuation travel U sufficiently long such to cover the entire rotation of the closure arm 42.

For example, for a trajectory S of 45° width, if the ratio Q is lowered by 3 °/mm to 1 °/mm, the actuation travel U of the first stem 62 of the first linear actuator 6 must be tripled.

Advantageously, it is also possible to obtain the ratio between the angular movement of the closure arm 42 and the actuation travel U of the first stem 62 of the first linear actuator 6 by means of the arrangement of the first linear actuator 6 with a tilt with respect to the first extension direction X such to minimize the force exerted on the lever arm 41, given the same discrete movement of the first stem 62 along the actuation travel U, e.g. 0.5 mm.

In particular, the actuation direction Z and the first extension direction X are advantageously incident on each other at the second end 41" and form a second angle β preferably comprised between 90° and 130°.

More in detail, in such case the second angle β is measured with the first stem 62 in the retracted position, where it is substantially entirely contained in the first jacket 61. Indeed, as the first stem 62 progressively slides along the actuation travel U, the angle β is reduced.

In particular, with the first stem 62 in the retracted position, the closure arm 42 is situated in the maximum opening position, and hence the second angle β is measured with the closure arm 42 in the aforesaid maximum opening position.

In such a manner, the orthogonal component of the movement of the first stem 62 is reduced with respect to the lever arm 41, determining that - given the same movement of the first stem 62 - the metering plate 4 rotates by a smaller angle.

In particular, the first linear actuator 6 exerts, by means of the stem 6, a thrust force Fs on the lever arm 41 which is in a per se known manner broken down into an orthogonal component Fsa, which determines the movement of the latter, and a parallel component Fsb which does not determine any movement of the lever arm 41.

More in detail, the component of the thrust force Fsa can be calculated by means of the following formula: *Fsa = sen (β)* * *Fs* and therefore depends on the angle β between the actuation direction Z and the first extension direction X.

Advantageously, the first linear actuator 6 is hinged to the lever arm 41 at the actuation point A, and the actuation point A is movable along the first extension direction X between at least two positions, in order to vary the first length D1 of the active section of the lever arm 41.

More in detail, with the term "movable" it is intended that the actuation point A can be moved and positioned in at least two different positions.

Of course, as set forth above, the first length D1 will be variable in a manner such that the ratio between the first length D1 itself and the second length D2 is always comprised between 1.5 and 0.45. In this manner it is also possible to vary the tilt of the actuation direction Z such to adjust the component of the thrust force Fsa, since such actuation direction Z passes through the actuation point A.

On the contrary, since the first stem 62 is coupled to the coupling hole 415 closest to the second end 41" of the lever arm 41, the first length D1 is maximized and the precision of the movement of the metering plate 4 will be greater than a first smaller length D1, given the same second angle β.

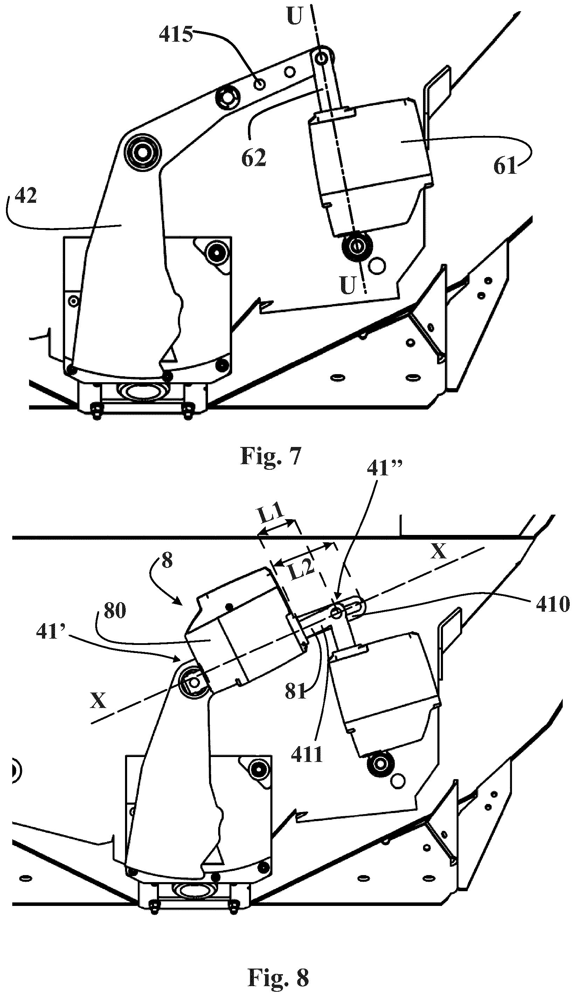

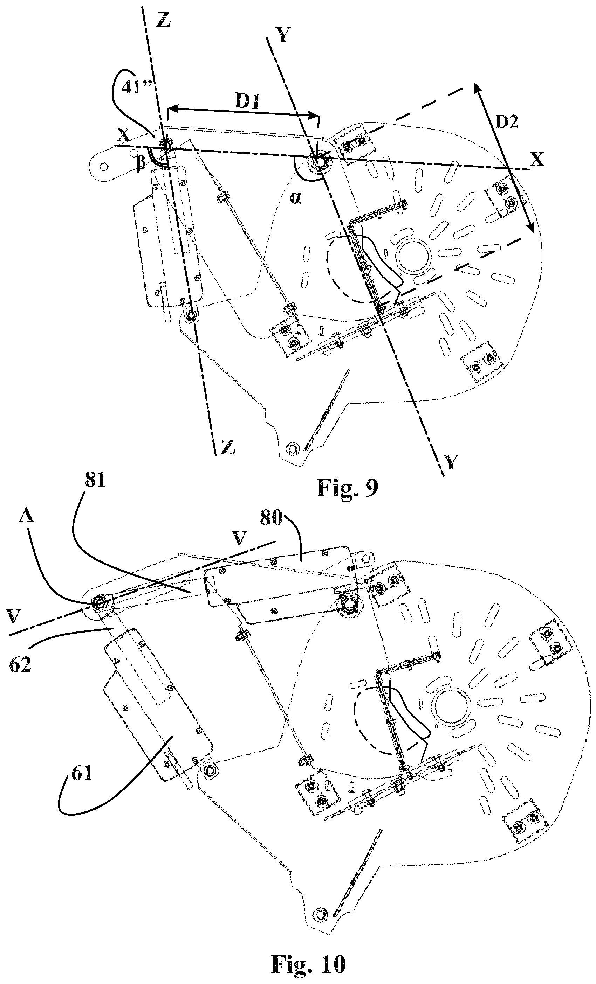

According to a first embodiment of the present invention, illustrated in figures 7 and 9, relative to two different embodiments of the aforesaid embodiment, the lever arm 41 is provided with at least two coupling holes 415 placed along the first extension direction X, and the first linear actuator 6 comprises coupling means for selectively coupling the first stem 62 of the first linear actuator 6 to one of the at least two coupling holes 415. Advantageously, in addition, the actuation point A is defined by the coupling hole 415 with which the first stem 62 of the first linear actuator 6 is coupled by means of the coupling means.

In particular, the actuation point A is advantageously movable between at least one retracted position, in which the actuation point A and the hinging point C are placed at a first distance L1 and to which a first metering curve C1 corresponds, and at least one extended position, in which the actuation point A and the hinging point C are placed at a second distance L2, greater than the first distance L1, and to which a second metering curve C2 corresponds.

Advantageously, the coupling means advantageously comprise the eyelets described above, together with the junction elements.

In operation, a user can vary the first length D1 of the active section by manually coupling and releasing the eyelet of the first stem 62 of the first linear actuator 6 at one of the coupling holes 415 in order to vary the closure sensitivity of the metering plate 4 along the movement trajectory S. In particular, hereinbelow by closure sensitivity it will be intended the smaller number of degrees traveled by the metering plate 4 along the movement trajectory S corresponding to a minimum movement (sensitivity) of the first stem 62 of the first linear actuator 6 along the actuation travel U thereof.

For example, by coupling the first stem 62 with one of the coupling holes 415 in order to shorten the first length D1 of the active section of the lever arm 41, one obtains lower closure sensitivity of the metering plate 4, however the second angle β increases and therefore the force exerted by the linear actuator 6 is smaller. In this manner, it is possible to maintain a good control of the metering of the treatment product also by shortening the first active length D1 of the lever arm 41.

Advantageously, the farming machinery 1 comprises at least one distance sensor (not depicted in the enclosed figures), preferably placed on the lever arm 41 and arranged for identifying the position of the actuation point A along the first extension direction X and generating a position signal. In particular, the distance sensor identifies on which coupling hole 415 the first stem 62 is coupled.

Advantageously, the farming machinery 1 comprises multiple distance sensors, each of which arranged for monitoring a specific pair of coupling holes 415 that are adjacent to each other.

Advantageously, in addition, the farming machinery 1 comprises a logic control unit, in data communication with the distance sensor and configured for driving the first linear actuator 6 to actuate the lever arm 41 in order to move the closure arm 42 along the movement trajectory S and adjust the opening of the dispensing opening 31 on the basis of the position signal of the distance sensor.

In particular, based on the generated position signal, the logic control unit will select a specific metering curve between at least the two metering curves C1, C2.

According to a second embodiment of the present invention, illustrated in figures 8 and 10, which show two different embodiments of the aforesaid second embodiment, the metering plate 4 is not directly pivoted to the tank 3, but to an intermediate element, which is fixed on the tank 3, in particular abutted against a lateral wall 33 of the latter.

Advantageously, in accordance with such second embodiment, also the first linear actuator 6 is pivoted to the tank by means of the aforesaid intermediate element, as is visible in figures 9 and 10.

In addition, according to the aforesaid second embodiment of figures 8 and 10, the lever arm 41 advantageously comprises a main portion 410 (in particular, fixed with respect to the metering plate 4), and an extensible portion 411, on which the actuation point A is made and which is slidably connected to the main portion 410 along the first extension direction X.

In particular, the main portion 410 is provided with the first end 41' of the lever arm 41 and the extensible portion 411 is provided with the second end 41".

Advantageously in addition, the machinery 1 comprises adjustment means, mechanically connected and interposed between the main portion 410 and the extensible portion 411 of the lever arm 41 and susceptible of acting on the extensible portion 411 in order to vary the position thereof along the first extension direction X with respect to the main portion 410.

Advantageously, the extensible portion 411 is movable between at least one retracted position, in which the actuation point A and the hinging point C are placed at a first distance L1 and to which a first metering curve C1 corresponds and at least one extended position, in which the actuation point A and the hinging point C are placed at a second distance L2, greater than the first distance L1, and to which a second metering curve C2 corresponds.

Of course, the extensible portion 411 can be adjusted at multiple intermediate positions, in which the actuation point A and the hinging point C are placed at a distance comprised between the first distance L1 and the second distance L2.

According to a first embodiment solution of the second embodiment of the present invention, the adjustment means comprise a second linear actuator 8, and the extensible portion 411 is movable along the first extension direction X by means of the second linear actuator 8 between the retracted position and the extended position.

Preferably, the second linear actuator 8 is provided with a second jacket 80 mounted outside the main portion 410 of the lever arm 41, and a second stem 81, movable between the retracted position and the extended position. Advantageously, the second stem 81 constitutes the extensible portion 411.

However, without departing from the protective scope of the present invention, the extensible portion 411 can be mechanically connected to the second stem 81 of the second linear actuator 8 and be moved by the latter between the retracted position and the extended position.

Advantageously, the main portion 410 is constituted by a metal plate fixed to the tank 3 at the hinging point C and preferably made in a single body with the closure arm 41. Advantageously, the main portion 410 is provided with at least one first rail, extended along the first extension direction X and on which the guide portion 411 is slidably engaged.

Advantageously, the junction elements of the first and second eyelet of the first linear actuator 6 are placed on the guide portion 411 in order to slide in a guided manner on the first rail following the actuation of the second linear actuator 8.

In this manner it is possible to precisely and automatically adjust the first length D1 of the lever arm 41, without varying the first angle α.

In particular, still according to the present embodiment solution, the second linear actuator 8 is capable of moving the first linear actuator 6, in particular the actuation point A, along an adjustment trajectory V, between at least the retracted position, in which the actuation direction Z is tilted with respect to a vertical direction, and an extended position, in which the actuation direction Z is substantially vertical.

Advantageously in addition, during the movement of the actuation point A along the adjustment trajectory V by means of the second linear actuator 8 from the retracted position to the extended position, the second angle β remains comprised within the above-reported interval.

In this manner, farming machinery 1 is obtained for distributing products on the ground in a highly precise and reproducible manner, also in the case of large-size dispensing openings 31, in which the adjustment of the flow occurs with limited bulk.

According to a second embodiment solution of the second embodiment, the adjustment means advantageously comprise a guide provided with at least one second rail, mechanically fixed to a lateral wall 33 of the tank 3. Advantageously, the extensible portion 411 is slidably mounted on the second rail and is manually adjustable by a user before actuating the farming machinery 1. Preferably, the adjustment means comprise quick fixing elements of the extensible portion 411 in extended, retracted position or in an intermediate position between the two, in a manner such to define a metering curve based on which the first linear actuator 6 adjusts the opening of the metering plate 4 during the treatment.

In a manner entirely analogous to the first embodiment, the machinery can also in this case comprise the distance sensor, and based on the generated position signal, the logic control unit will select the correct metering curve.

Advantageously, in a manner common to the first and to the second embodiment, the farming machinery 1 comprises at least one adjustment plate 7, which is interposed between the metering plate 4 and the tank 3, is mechanically connected to the latter, is provided with at least one first through opening 71 and at least one second through opening 72 and the adjustment plate 7 is movable between at least one first position, in which the first through opening 71 is placed at the dispensing opening 31 of the tank 3 and the metering plate 4 is placed to at least partially close the first through opening 71, and a second position, in which the second through opening 72 is placed at the dispensing opening 31 of the tank 3, and the metering plate 4 is placed to at least partially close the second through opening 72.

In particular, when the first through opening 71 is placed at the dispensing opening 31 of the tank 3, the second through opening 72 is placed against the lateral wall 33 of the tank 3 so as to be closed and thus prevent the passage of product to be distributed.

In the same manner, when the second through opening 72 is placed at the dispensing opening 31 of the tank 3 the first through opening 71 is placed against the lateral wall 33 of the tank 3 so as to be closed and thus prevent the passage of product to be distributed.

Advantageously, the dispensing opening 31 has an irregular parallelepiped shape, and is advantageously delimited by a base section, preferably rectilinear and by two oblique sides 310 which define a substantially trapezoidal lower portion on the dispensing opening 31. In addition, advantageously, the dispensing opening 31 is delimited on the upper part by an irregular edge, substantially curvilinear, which defines an irregular upper portion on the dispensing opening 31, preferably provided with an extension greater than the trapezoidal lower portion.

Preferably, the first through opening 71 is counter-shaped with respect to the dispensing opening 31, and the second through opening 72 is provided with an extension smaller than the first through opening 71.

The farming machinery 1 then allows selecting a different metering curve as a function of the different operating conditions.

More in detail, each through opening corresponds with a different metering curve, where hereinbelow with the expression "metering curve" it will be intended a function that allows describing a function which allows describing the dependence of the flow rate (e.g. expressed in grams per second) of the product to be distributed as a function of the movement (e.g. expressed in mm) of the metering plate 4 along the movement trajectory S.

In particular, the first through opening 71 is associated with a third metering curve while the second through curve 72 is associated with a fourth metering curve.

Preferably, the first through opening 71 and the second through opening 72 are shaped in a manner such that the third metering curve and the fourth metering curve are associable with a line.

In accordance with the preferred embodiment in which the first through opening 71 is provided with a passage section greater than the passage section of the second through opening 72, the third metering curve is provided with a greater angular coefficient (being steeper). This involves a lower sensitivity of the flow of product dispensed as a function of the movement of the metering plate 4, which allows obtaining a more precise adjustment of the flow of product dispensed upon variation of the movement of the metering plate 4 itself between the different operating positions.

For example, with a movement of the stem 62 of the first linear actuator 6 by a minimum travel of 1 mm along the actuation travel U, the increase or the decrease of flow will be greater for the third metering curve than the fourth metering curve (with "more horizontal" progression), given the same starting position along the actuation travel U.

Advantageously, the second metering curve is particularly advantageous in the case of reduced product flow rates, e.g. comprised between 20 g/s and 400 g/s.

In this manner, according to the second embodiment solution of the second embodiment of the present invention, if the first through opening 71 is selected, the second linear actuator 8 advantageously acts on the actuation point A, preferably translating it into extended position. Consequently, the lever arm 41 will be extended up to reaching the maximum extension, obtaining a ratio between the actuation travel U and the first length D1 comprised in the intervals described in the first embodiment.

In this manner, a combination of the advantages described up to now is obtained: on one hand, the orthogonal thrust component of the first stem 62 on the lever arm 41 is limited, on the other hand the angular movement is limited given the same travel of the first stem 62.

Of course, if the second through opening 72 is selected, depending on the dose of product to be dispensed and on the plurality of operating parameters better described hereinbelow, the second linear actuator 8 advantageously acts on the actuation point A (and consequently on the first length D1 of the lever arm 41) in order to optimize the ratio between the increase of flow dispensed following the opening of the metering plate 4, in relation to the travel of the first stem 62 of the first linear actuator 6. In this manner it is also possible to obtain a plurality of metering curves, since for a same through opening 71, 72 and given the same travel of the first stem 62 of the first linear actuator 6, the metering plate 4 can be moved with more or less sensitivity, based on the width of the second angle β and of the first length D1.

In particular, the number of selectable metering curves is proportional to the sensitivity of the travel of the second linear actuator 8. For example, a movement of the actuation point A along the adjustment trajectory V of 1 mm, will correspond with a variation of 1° of the second angle β.

Of course, without departing from the protective scope of the present invention, the first linear actuator 6 and the second linear actuator 8 can also be employed according to different operating modes with respect to that described above.

For example, the first linear actuator 6 is employable in order to fix an objective flow, by setting a fixed position of the first stem 62 along the actuation travel U and therefore defining an initial second angle β, which corresponds with a specific degree of opening of the dispensing opening 31.

In operation, depending on the speed of the farming machinery 1 or on the needs of the operator during the dispensing of the product on the ground, the second linear actuator 8 can be employed for adjusting the opening of the metering plate 4 along the movement trajectory S, by varying the first active length D1 of the lever arm 41. More in detail, the second linear actuator 8 acts thrustingly against the junction elements of the two eyelets, which slide along the first rail, by slightly rotating the metering plate 4 since, as set forth above, the travel of the first stem 62 of the first linear actuator 6 is fixed to the starting position.

In other words, the metering curve is defined by the combination of the initial position of the first stem 62 and of the adjustment plate 7, and the movement along the metering curve occurs by means of the actuation of the second linear actuator 8.

Analogously, it is possible to advantageously firstly fix the first length of the lever arm 41 by means of the second linear actuator 8 (or, according to the first embodiment variant by means of the manual movement on a coupling hole 415 or along the rail on which the extensible portion of the lever arm 41 slides), and execute a fine adjustment on the position of the metering plate 4 by means of the actuation of the first linear actuator 6.

Advantageously, the farming machinery 1 comprises a third linear actuator, preferably of electric type, mechanically connected to the adjustment plate 7 in order to move the latter between the first position and the second position.

In accordance with the aforesaid preferred embodiment, the adjustment plate 7 is advantageously provided, preferably in a single body, with an adjustment arm 70 actuatable for moving the adjustment plate 7 between the first and the second position.

Advantageously, the third linear actuator is advantageously fixed to the adjustment arm 70 such to actuate it in an automated manner in order to move the adjustment plate 7 between the aforesaid first and second position.

Advantageously, the farming machinery 1 is a machinery of electronic type, i.e. preferably drivable in an automatic manner by an operator directly from the cabin by means of a user interface (or alternatively by means of a dedication application remotely connected to the machinery), as better explained hereinbelow.

Advantageously, the farming machinery 1 provides that at least the lever arm 41 is moved also during the operation of the machinery itself, so as to repeatedly adjust the position thereof as a function of the variation of the operating parameters (such as for example the advancing speed of the farming machinery, the work width, the specific dispensing flow rate per unit of surface).

Advantageously, as set forth above, according to the first embodiment of the present invention, the farming machinery 1 comprises a logic control unit electrically connected to at least the first linear actuator 6, and is configured for driving the first linear actuator 6 to actuate the lever arm 41 and in order to move the closure arm 42 along the movement trajectory S and adjust the opening of the dispensing opening 31.

Advantageously in addition, according to the second embodiment of the present invention the logic control unit is also electrically connected to the second linear actuator 8 and is configured for driving the second linear actuator 8 to move the extensible portion 411 of the lever arm 41 in order to set one between the first metering curve C1 and the second metering curve C2, and to the third linear actuator, in order to adjust the actuation point A or the adjustment plate 7.

In particular, the logic control unit comprises a control panel, preferably installed in a cabin of the farming machinery 1 and configured for allowing a user to select and set the operating position of the closure arm 42 and one between the first position and the second position of the adjustment plate 7.

More in detail, by means of the aforesaid control panel the user sets such positions and the logic control unit sends a corresponding electrical signal to the first linear actuator 6, to the second linear actuator 8 and to the third linear actuator to actuate the latter to respectively move the lever arm 41, the actuation point A and the adjustment plate 7 in order to place them in the desired positions.

In particular, according to the embodiment in which the containment tank 3 is provided with two dispensing openings 31 and with two metering plates 4, the logic control unit is arranged for driving the first linear actuators 6 which adjust the opening of the different metering plates 4 in a manner independent of each other, in this manner enabling the simultaneous distribution of two different quantities of product through the two dispensing openings 31 on a same ground or the working of two different terrains that are adjacent to each other.

In particular, according to the aforesaid embodiment it is possible to load one or more product metering prescription maps and configure the logic control unit so that it actuates the first linear actuators 6 connected to the two metering plates 4 according to the aforesaid prescription maps.

Advantageously, the logic control unit can also comprise a calculation unit and a memory unit, within the which a series of metering programs are stored comprising for example one or more of the aforesaid prescription maps.

Advantageously, each metering program corresponds with a set of data comprising at least one angular position of the closure plate 4 and a position of the adjustment plate 7, which depend on the particular product to be distributed (and its physical-chemical characteristics) and on a series of operating parameters such as for example the width and the type of ground to be treated and the speed of the farming machinery 1.

More in detail, the logic control unit is configured for allowing the user to set the product to be distributed and the aforesaid operating parameters by means of the control panel and the calculation unit is configured for calculating and selecting, based on the inserted data, the correct metering program from among those stored in the memory unit.

The logic control unit is finally configured in order to set the corresponding positions of the closure plate 4 and of the adjustment plate 7 of the corresponding metering program and actuate the corresponding linear actuators 6, 8 to move the lever arm 41 and the adjustment arm 70 in order to place them in the desired positions.

According to a first embodiment variant of the present invention, the adjustment arm 70 is movable manually.

According to a second alternative embodiment variant of the present invention, the third linear actuator which moves the adjustment arm 70 is a hydraulic actuator.

According to the aforesaid embodiment variants, the farming machinery 1 advantageously comprises a proximity sensor, which is preferably placed at the adjustment arm 70 in order to detect position of the latter and, consequently, in order to detect which of the two through openings 71, 72 of the adjustment plate 7 is selected.

Of course, without departing from the protective scope of the present invention, the proximity sensor can be placed in any position which allows detecting the difference of positioning of the through openings 71, 72 with respect to the dispensing opening 31.

Such proximity sensor is advantageously connected in data communication with the logic control unit, in a manner such that, in case of manual movement of the adjustment arm 70, e.g. in case of maintenance (or in manual adjustment mode of the adjustment plate), the logic control unit is capable of identifying which through opening 71, 72 is placed at the dispensing opening 31 and communicating it to the, e.g. by means of a visible signal on the control panel.

Advantageously, the logic control unit is also arranged for adjusting the travel of the linear actuators 6, 8 based on the position signal received.

More in detail, the logic control unit is also arranged for setting the first or the second metering curve based on the position signal received by the proximity sensor, and the travel of the first linear actuator 6 will depend on such curve.

Of course, as stated above, the logic control unit can adjust the first linear actuator 6 and the second linear actuator 8 in order to move the metering plate 4 even in the absence of the adjustment plate 7.

Advantageously, the farming machinery 1 comprises a guide plate 43, fixed to the tank 3 and interposed between the tank 3 and the adjustment plate 7.

Advantageously, the guide plate 43 is provided with an opening counter-shaped to the first through opening 71 and the guide plate 43 is mechanically fixed to the tank 3 in a manner such that the aforesaid opening is superimposed on the dispensing opening 31.

Advantageously, the guide plate 43 is provided with a guide surface along which the closure arm 41 is susceptible of sliding during its movement along the trajectory S, and preferably also the adjustment plate 7 is susceptible of sliding during its movement between the first and the second position.

Advantageously, the guide plate 43 comprises a fixing wall 431, which is parallel to the lateral wall 33 of the tank 3 and is fixed in abutment against the the latter, a slide wall 432, which is orthogonal to the fixing wall and defines the aforesaid guide surface, and, preferably, a retention wall 430, substantially parallel to the fixing wall 431 and defining, with the slide wall 432 and the fixing wall 431, a slide channel along which the metering plate 4 and preferably also the adjustment plate 7 slides.

Advantageously, the guide surface of the guide plate 43 defines a slide channel, which is provided with a retention wall 430, which cooperates with a portion of the closure arm 42 in order to retain the latter adjacent to the dispensing opening 31. In this manner it is possible to prevent the weight exerted by the treatment product from the tank 3 interior from moving the closure arm 42 away from the guide plate 43 and allowing the product to leak through zones of the dispensing opening 31 that would normally be covered.

In accordance with the preferred embodiment, and as stated above, the closure arm 42 is pivoted to the tank 3, preferably to the same lateral wall 33, around the hinging point C, and is rotatably connected to the latter around a rotation axis R.

Of course, in accordance with the aforesaid embodiment, also the slide wall 432 and the slide channel of the guide plate 43 are counter-shaped with respect to the trajectory S, and in particular are extended circumferentially with respect to the hinging point C.

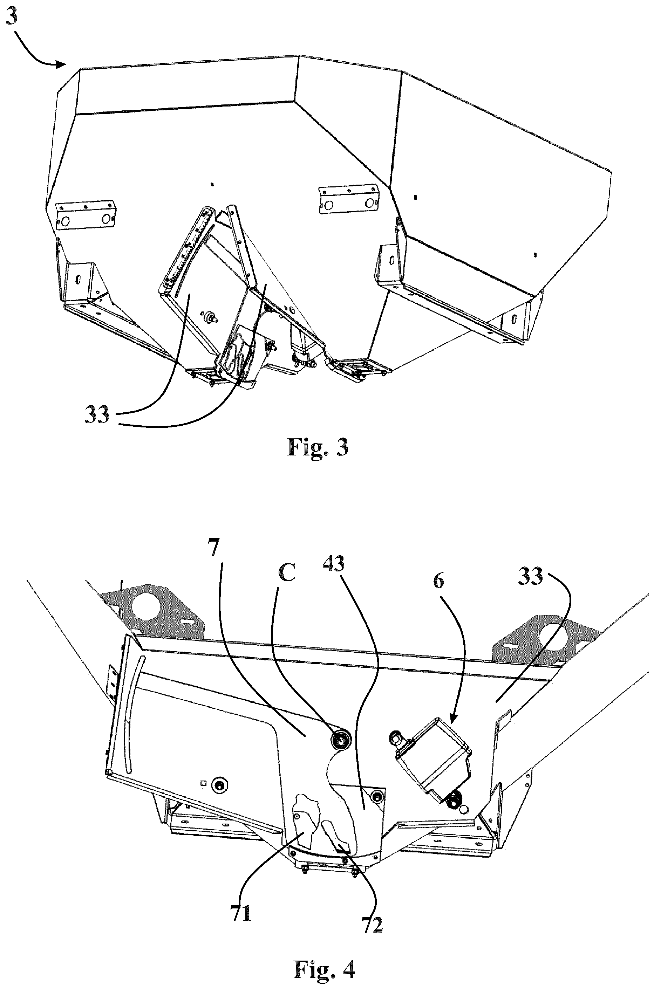

In accordance with the preferred embodiment illustrated in figure 4, the adjustment plate 7 is pivoted to the tank 3, preferably to the same lateral wall 33, around the hinging point C.

In this manner the adjustment plate 7 is advantageously rotatably connected to the tank 3 around the same first rotation axis R and is movable along a movement direction thereof circumferential with respect to the hinging point C, preferably along an arc of circumference between the first position and the second position.

Advantageously, the tank 3 is extended with an overturned pyramidal frustoconical shape, in particular tapered between an upper end thereof and an opposite lower end.

Preferably, the tank 3 comprises two containing portions, preferably made in a single body, which are side-by-side each other and preferably symmetrical.

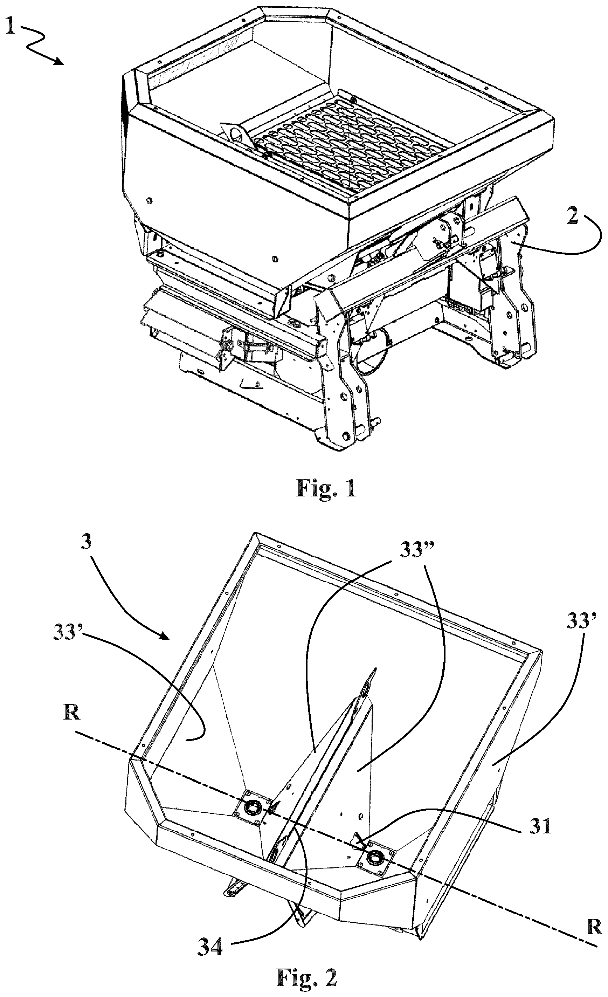

In particular, each containing portion is provided with an overturned pyramidal frustoconical shape and is extended between a first lateral wall 33' and a second lateral wall 33", opposite and tilted with respect to the first lateral wall 33'. More in detail, the two containing portions are placed side-by-side each other with the respective second lateral walls 33" facing and in particular which are connected at a common upper edge 34 thereof, which is placed within the containment volume of the tank 3, as is visible in figure 2.

Preferably, the two second lateral walls 33" are provided with a height lower than the first lateral walls 33' such that the tank 3 is provided with a containment volume which is extended between a common upper portion and two separate lower portions, one for each containing portion.

In accordance with such embodiment the tank 3 is provided with two separate dispensing openings 31, one for each containing portion, which is preferably made on corresponding second lateral walls 33".

In particular, the tank 3 is preferably provided with a right dispensing opening 31 and an opposite left dispensing opening 31, which are preferably made on corresponding second lateral walls 33" of the tank 3. In the same manner, the distribution means 5 advantageously comprise two distinct spreader plates 50, each of which placed below a corresponding containing portion.

Of course, without departing from the protective scope of the present invention, the dispensing opening 31 can be made on any other wall of the tank 3, such as for example the bottom of the portions of the tank 3 or the first lateral walls 33'.

In the event in which the dispensing opening 31 is placed on the bottom of the tank 3, the tank 3 advantageously comprises a tank body and a bottom plate, preferably made of stainless steel, mechanically fixed to the bottom wall of the tank body.

Advantageously, the metering plate 4, the first linear actuator 6 and, if present, also the second linear actuator 8 and the adjustment plate 7 and the third linear actuator, are fixed to the bottom plate.

In such case, consequently, also the metering plate 4 and the adjustment plate 7 will be placed respectively on the bottom of the portions of the tank 3 or on the first lateral walls 33', in order to allow an adjustment of the effective flow independent of the position of the dispensing opening 31.

Of course in accordance with such embodiment the farming machinery 1 is also provided with two metering plates 4 and two adjustment plates 7, fixed to corresponding containing portions, so as to allow the precise and regulated metering of the product to be distributed from both containing portions of the tank 3.

Preferably, in accordance with such embodiment, the machinery 1 is provided with two first linear actuators 6 and (optionally) with two second linear actuators 8, each of which mechanically connected to a corresponding metering plate 4 in order to move it along the corresponding movement trajectory S.

Advantageously, the first linear actuators 6 and (possibly) the second linear actuators 8 are independent of each other and, are differently actuatable in order to allow different dispensing from the right dispensing opening 31 and from the left dispensing opening 31 of the two containing portions of the tank 3.

In such case, consequently, also the lever arm 41 and the closure arm 42 will be respectively placed on the bottom of the portions of the tank 3 or on the first lateral walls 33', in order to allow an effective adjustment of the flow independent of the position of the dispensing opening 31.

Of course in accordance with such embodiment the closure means 4 are also provided with two lever arms 41 and two closure arms 42, fixed to corresponding containing portions, so as to allow the precise and adjusted metering of the product to be distributed from both the containing portions of the tank 3.

Advantageously the tank 3 comprises at least one housing hole, and preferably a housing hole for each containing portion, which is made passing through the lower wall of the tank 3.

As set forth above, the farming machinery 1 comprises distribution means 5 provided with a spreader plate 50, which are well known to the man skilled in the art and therefore will not be described in detail. More in detail, the spreader plate 50 is provided with at least one spreader blade 501, and preferably two spreader blades 501, fixed on an upper face of the spreader plate 50, directed towards the dispensing opening 31, and in particular the spreader blades 501 are extended from the center of the spreader plate 50 in opposite directions, up to a peripheral edge of the spreader plate 50 itself or projecting towards the exterior from the edge of the spreader plate 50.

Advantageously, the distribution means 5 also comprise at least one mixer body 51, placed within the tank 3 and comprising a pin 510, rotatably housed, preferably to size by means of suitable bearings, within a corresponding housing hole.

The pin 510 is fixed to the spreader plate 50 in order to be moved together with the latter, which is for example, in a per se known manner, moved by means of the power take-off placed to connect between the tank 3 and the drive motor of the machinery 1.

The pin 510 advantageously comprises, at an upper end thereof, an enlarged plate 511 from which at least one tab 512 is projectingly extended, intended to convey the product to be dispensed towards the dispensing opening 31 during its movement imparted by the spreader plate 50.

Of course, without departing from the protective scope of the present invention, the enlarged plate 511 can lack the aforesaid tab 512, depending on the type of product to be distributed; for example in order to distribute fragile products such as seeds the enlarged plate will lack the tab 512).

Advantageously, the machinery 1 comprises a GPS device mounted on the support frame 2, electrically connected in data communication with the logic control unit.

More in detail, the GPS device is arranged for detecting the position of the machinery 1 along the path to be completed during working and for sending, to the logic control unit, a corresponding position signal, representative of the position of the farming machinery 1.

Advantageously, the logic control unit is arranged for receiving the aforesaid position signal and actuating the first linear actuator 6 and/or the second linear actuator 8 in order to correct the flow of products dispensed through the dispensing opening 31 based on the position of the farming machinery 1.

**In** addition, the machinery 1 advantageously comprises at least one load cell, electrically connected in data communication with the logic control unit and mechanically fixed between the support frame 2 and the connection structure to the drive motor so as to allow calculating, preferably continuously, due to an automatic filtering, the weight of the product within the containment tank 3, as well as its physical flow characteristics.

More in detail, the load cell is advantageously arranged for generating a flow signal, representative of the flow of products dispensed by the dispensing opening 31, and sending the aforesaid flow signal to the logic control unit.

For example, the aforesaid flow signal is generated based on the continuous calculation of the weight difference of the product contained within the containment tank 3.

Advantageously, the logic control unit is arranged for receiving the aforesaid flow signal and actuating the first linear actuator 6 and/or the second linear actuator 8 in order to correct the flow of products dispensed through the dispensing opening 31.

In this manner, the logic control unit to which the load cell is connected measures the quantity of product exiting from the containment tank 3 and is capable of verifying and if necessary adjusting the metering automatically, in particular by modifying the position of the metering plate 4 by means of one of the linear actuators 6, 8.

In particular, in the event in which the load cell detects a flow lower than the objective flow, the logic control unit would command one of the linear actuators 6, 8 to move the metering plate 4 to more greatly open the dispensing opening 31.

On the contrary, in the event in which the load cell detected a flow greater than the objective flow, the logic control unit would command the first linear actuator 6 and/or the second linear actuator 8 to move the metering plate 4 to partially close the dispensing opening 31 and correct the flow of products dispensed by the dispensing opening 31 itself.

In particular, the weighing cells, due to the aforesaid automatic filtering, calculate the different fertilizer flow characteristics with maximum precision and reliability even during movement.

In addition, the machinery 1 described herein can be provided with the ISOBUS technology, i.e. with a technological communication standard that is based on the standard ISO 11783, due to which with only one display all of the compatible ISOBUS tools are driven from the cabin, such tools connected to the display.

Due to such characteristic, the machinery 1, object of the invention, is able to automatically manage, for example by means of prescription maps, the dose of product to be distributed on the ground.

In addition, as set forth above, the fertilizer spreader, object of the invention, allows automatically adjusting the opening of the metering plate 4 as a function of the advancing speed of the machinery 1 (DPAE), which can be detected by means of the GPS device or detection directly from the kilometer counter of the drive motor, and as a function of the actual flow characteristics of the products used in fertilization.

Therefore, even if changing the advancing speed, the pre-selected dose remains substantially constant. The invention thus conceived therefore attains the pre-established objects.

## Claims

1. Farming machinery for distributing treatment products on the ground, which comprises:
- a support frame (2);
- at least one tank (3), fixed to said support frame (2) and adapted to contain products to be distributed on the ground, said tank (3) being provided with at least one opening (31) for dispensing said products to be distributed;
- at least one metering plate (4), which comprises a lever arm (41) and a closure arm (42) fixed together and is mechanically pivoted to said tank (3) at a hinging point (C) interposed between said lever arm (41) and said closure arm (42);
said closure arm (42) being movable with respect to said hinging point (C) along a movement trajectory (S) between multiple operating positions in which it is placed to at least partially close said dispensing opening (31);
wherein said machinery comprises at least one first linear actuator (6) which is pivoted to said lever arm (41) and to said tank (3), and is provided with a first jacket (61) and with a first stem (62), which is extensible with respect to said first jacket (61) along an actuation travel (U) in an actuation direction (Z) transverse to said lever arm (41), in order to move said closure arm (42) along said movement trajectory (S);
wherein said first linear actuator (6) acts on said lever arm (41) at an actuation point (A); wherein said first linear actuator (6) acts on said lever arm (41) in order to rotate said metering arm (42) around said hinging point (C) in two opposite rotation senses; wherein said first linear actuator (6) can act thrustingly, in order to rotate said metering arm (42) in a first rotation sense, and under traction, in order to rotate said metering arm (42) in a second rotation sense;
wherein the ratio (Q) between the angular movement of said closure arm (42) along said movement trajectory (S) and the actuation travel (U) of the first stem (62) of said first linear actuator (6) along said actuation direction (Z) is smaller than 0.65 °/mm;
and wherein said first linear actuator (6) is an electric actuator, provided with a travel sensitivity of at least 2 mm.

2. Machinery according to claim 1, **characterized in that** the first stem (62) of said first linear actuator (6) acts along said actuation direction (Z) for a minimum travel equal to 0.5 mm, determining a rotation of said metering plate (4) smaller than or equal to 0.3°.

3. Machinery according to claim 1 or 2, **characterized in that**:
- said lever arm (41) is extended along a first extension direction (X), between a first end (41'), placed at said hinging point (C) and a second opposite end (41");
said lever arm (41) being provided with an active section, having a first length (D1), measured between the first end (41') thereof and the actuation point (A);
- said closure arm (42) is extended along a second extension direction (Y), for a second length (D2), between a third end (42') placed at said hinging point (C) and a fourth end (42") opposite said third end (42');
the ratio between the first length (D1) and the second length (D2) being comprised between 1.5 and 0.45.

4. Farming machinery according to claim 3, **characterized in that** said first extension direction (X) and said second extension direction (Y) hit each other and together form a first angle (α) comprised between 100° and 130°; and that
said actuation direction (Z) and said first extension direction (X) hit each other at said second end (41") and form a second angle (β) comprised between 90° and 130° with said first stem (62) in a retracted position, in which it is substantially totally housed in said first jacket (61).

5. Farming machinery for distributing treatment products on the ground according to claim 3 or 4, **characterized in that** said first linear actuator (6) is hinged to said lever arm (41) at said actuation point (A);
said actuation point (A) being movable along said first extension direction (X) between at least two positions, in order to vary the first length (D1) of the active section of said lever arm (41).

6. Farming machinery for distributing treatment products on the ground according to claim 5, **characterized in that** said lever arm (41) is provided with at least two coupling holes (415) placed along said first extension direction (X), and said first linear actuator (6) comprises coupling means for selectively coupling the stem (62) of said first linear actuator (6) to one of said at least two coupling holes (415);
said actuation point (A) being defined by the coupling hole (415) with which the stem (62) of said first linear actuator (6) is connected by means of said coupling means, and being movable between:
- at least one retracted position, in which said actuation point (A) and said hinging point (C) are placed at a first distance (L1) and with which a first metering curve (C1) corresponds; and
- at least one extended position, in which said actuation point (A) and said hinging point (C) are placed at a second distance (L2), greater than said first distance (L1), and with which a second metering curve (C2) corresponds.

7. Farming machinery for distributing treatment products on the ground according to claim 5, **characterized in that** said lever arm (41) comprises a fixed main portion (410), and an extensible portion (411), on which said actuation point (A) is obtained and which is slidably connected to said main portion (410) along said first extension direction (X);
said machinery (1) comprising adjustment means, mechanically connected and interposed between the main portion (410) and the extensible portion (411) of said lever arm (41) and susceptible of acting on said extensible portion (411) in order to vary its position along said first extension direction (X) with respect to said main portion (410), between
- at least one retracted position, in which said actuation point (A) and said hinging point (C) are placed at a first distance (L1) and with which a first metering curve (C1) corresponds; and
- at least one extended position, in which said actuation point (A) and said hinging point (C) are placed at a second distance (L2), greater than said first distance (L1), and with which a second metering curve (C2) corresponds.

8. Farming machinery for distributing treatment products on the ground according to claim 7, **characterized in that** said adjustment means comprise a second linear actuator (8) and said extensible portion (411) is movable by means of said second linear actuator (8) along said first extension direction (X) between said retracted position and said extended position.

9. Farming machinery for distributing treatment products on the ground according to any one of the preceding claims, **characterized in that** it comprises two said metering plates (4), said tank (3) being provided with a right dispensing opening (31) and a left dispensing opening (31);
said farming machinery (1) being provided with at least two said first linear actuators (6), each of which mechanically connected to a corresponding said metering plate (4) in order to move it along the corresponding said movement trajectory (S);
in which said first linear actuators (6) are independent of each other and are differently actuatable in order to allow different dispensing from said right dispensing opening (31) and said left dispensing opening (31).

10. Farming machinery for distributing treatment products on the ground according to any one of the preceding claims, **characterized in that** it comprises a logic control unit electrically connected to at least said first linear actuator (6) and is configured for driving said first linear actuator (6) to actuate said lever arm (41) in order to move said closure arm (42) along said movement trajectory (S) and adjust the opening of said dispensing opening (31).

11. Farming machinery for distributing treatment products on the ground according to claim 10, **characterized in that** it comprises at least one load cell, electrically connected and in data communication with said logic control unit and arranged for generating a flow signal, representative of the flow of products dispensed by said dispensing opening (31) and sending said flow signal to said logic control unit;
said logic control unit being arranged for receiving said flow signal and actuating at least said first linear actuator (6) in order to correct the flow of products dispensed by said dispensing opening (31).

## Patentansprüche

1. Landwirtschaftliche Maschine zum Verteilen von Behandlungsprodukten auf dem Boden, die Folgendes umfasst:
- einen Tragrahmen (2);
- mindestens einen Behälter (3), der an dem genannten Tragrahmen (2) befestigt und geeignet ist, auf dem Boden zu verteilende Produkte zu enthalten, wobei der genannte Behälter (3) mit mindestens einer Ausgabeöffnung (31) für die genannten zu verteilenden Produkte ausgestattet ist;
- mindestens eine Dosierplatte (4), die einen Hebelarm (41) und einen Schließarm (42) umfasst, die aneinander befestigt sind, und die an einem zwischen dem genannten Hebelarm (41) und dem genannten Schließarm (42) eingefügten Anlenkpunkt (C) mechanisch an dem genannten Behälter (3) angelenkt ist;
wobei der genannte Schließarm (42) im Verhältnis zu dem genannten Anlenkpunkt (C) entlang einer Versetzungsbahn (S) zwischen mehreren Arbeitspositionen beweglich ist, in denen sie die genannte Ausgabeöffnung (31) mindestens teilweise verschließend positioniert ist;
wobei die genannte Maschine mindestens einen ersten Linearantrieb (6) umfasst, der an dem genannten Hebelarm (41) und an dem genannten Behälter (3) angelenkt ist und mit einer ersten Buchse (61) und einem ersten Schaft (62) versehen ist, der im Verhältnis zu der genannten ersten Buchse (61) entlang eines Betätigungshubs (U) in einer Betätigungsrichtung (Z) quer zu dem genannten Hebelarm (41) ausfahrbar ist, um den genannten Schließarm (42) entlang der genannten Versetzungsbahn (S) zu bewegen;
wobei der genannte erste Linearantrieb (6) auf den genannten Hebelarm (41) an einem Betätigungspunkt (A) wirkt; wobei der genannte erste Linearantrieb (6) auf den genannten Hebelarm (41) wirkt, um den genannten Dosierarm (42) um den genannten Anlenkpunkt (C) in zwei entgegengesetzte Drehrichtungen zu drehen; wobei der genannte erste Linearantrieb (6) schiebend wirken kann, um den genannten Dosierarm (42) in einer ersten Drehrichtung zu drehen, und ziehend, um den genannten Dosierarm (42) in einer zweiten Drehrichtung zu drehen;
wobei das Verhältnis (Q) zwischen der Winkelverschiebung des genannten Schließarms (42) entlang der genannten Versetzungsbahn (S) und dem Betätigungshub (U) des ersten Schafts (62) des genannten ersten Linearantriebs (6) entlang der genannten Betätigungsrichtung (Z) weniger als 0,65°/mm beträgt;
und wobei der genannte erste Linearantrieb (6) ein Elektroantrieb mit einer Hubempfindlichkeit von mindestens 2 mm ist.

2. Maschine nach Anspruch 1, **dadurch gekennzeichnet, dass** der erste Schaft (62) des genannten ersten Linearantriebs (6) entlang der genannten Betätigungsrichtung (Z) über einen Mindesthub von 0,5 mm wirkt, was zu einer Drehung der genannten Dosierplatte (4) von weniger oder gleich 0,3° führt.

3. Maschine nach Anspruch 1 oder 2, **dadurch gekennzeichnet, dass**:
- der genannte Hebelarm (41) entlang einer ersten Verlaufsrichtung (X) zwischen einem ersten Ende (41'), das sich an dem genannten Anlenkpunkt (C) befindet, und einem gegenüberliegenden zweiten Ende (41") verläuft;
wobei der genannte Hebelarm (41) mit einem Nutzabschnitt mit einer ersten Länge (D1) versehen ist, die zwischen seinem ersten Ende (41') und dem Betätigungspunkt (A) gemessen wird;
- der genannte Schließarm (42) verläuft entlang einer zweiten Verlaufsrichtung (Y), über eine zweite Länge (D2), zwischen einem dritten Ende (42'), das an dem genannten Anlenkpunkt (C) positioniert ist, und einem vierten Ende (42'), das dem genannten dritten Ende (42') gegenüberliegt;
wobei das Verhältnis zwischen der ersten Länge (D1) und der zweiten Länge (D2) zwischen 1,5 und 0,45 liegt.

4. Landwirtschaftliche Maschine nach Anspruch 3, **dadurch gekennzeichnet, dass** die genannte erste Verlaufsrichtung (X) und die genannte zweite Verlaufsrichtung (Y) aufeinandertreffen und zwischen einander einen ersten Winkel (α) zwischen 100° und 130° bilden; und dass
die genannte Betätigungsrichtung (Z) und die genannte erste Verlaufsrichtung (X) an dem genannten zweiten Ende (41") aufeinandertreffen und einen zweiten Winkel (β) zwischen 90° und 130° bilden, wenn sich der genannte erste Schaft (62) in einer zurückgezogenen Position befindet, in der er im Wesentlichen vollständig in der genannten ersten Buchse (61) untergebracht ist.

5. Landwirtschaftliche Maschine zum Verteilen von Behandlungsprodukten auf dem Boden nach Anspruch 3 oder 4, **dadurch gekennzeichnet, dass** der genannte erste Linearantrieb (6) an dem genannten Hebelarm (41) an dem genannten Betätigungspunkt (A) angelenkt ist;
wobei der genannte Betätigungspunkt (A) entlang der genannten ersten Verlaufsrichtung (X) zwischen mindestens zwei Positionen beweglich ist, um die erste Länge (D1) des Nutzabschnitts des genannten Hebelarms (41) zu variieren.

6. Landwirtschaftliche Maschine zum Verteilen von Behandlungsprodukten auf dem Boden nach Anspruch 5, **dadurch gekennzeichnet, dass** der genannte Hebelarm (41) mit mindestens zwei Kupplungsöffnungen (415) versehen ist, die entlang der genannten ersten Verlaufsrichtung (X) angeordnet sind, und der erste Linearantrieb (6) Kupplungsmittel umfasst, um wahlweise den Schaft (62) des genannten ersten Linearantriebs (6) mit einer der genannten mindestens zwei Kupplungsöffnungen (415) in Eingriff zu bringen;
wobei der genannte Betätigungspunkt (A) durch die Kupplungsöffnung (415) definiert wird, mit der der Schaft (62) des genannten ersten Linearantriebs (6) mittels der genannten Kupplungsmittel gekoppelt ist, und zwischen Folgendem beweglich ist:
- mindestens einer eingezogenen Position, in der der genannte Betätigungspunkt (A) und der genannte Anlenkpunkt (C) in einem ersten Abstand (L1) positioniert sind, und der eine erste Dosierkurve (C1) entspricht; und
- mindestens einer ausgefahrenen Position, in der der genannte Betätigungspunkt (A) und der genannte Anlenkpunkt (C) in einem zweiten Abstand (L2) positioniert sind, der größer als der genannte erste Abstand (L1) ist, und der eine zweite Dosierkurve (C2) entspricht.

7. Landwirtschaftliche Maschine zum Verteilen von Behandlungsprodukten auf dem Boden nach Anspruch 5, **dadurch gekennzeichnet, dass** der genannte Hebelarm (41) einen festen Hauptabschnitt (410) und einen ausfahrbaren Abschnitt (411) umfasst, an dem der genannte Betätigungspunkt (A) eingerichtet ist und der verschiebbar mit dem genannten Hauptabschnitt (410) entlang der genannten ersten Verlaufsrichtung (X) verbunden ist;
wobei die genannte Maschine (1) Einstellmittel umfasst, die mechanisch verbunden und zwischen dem Hauptabschnitt (410) und dem ausfahrbaren Abschnitt (411) des genannten Hebelarms (41) eingefügt sind und geeignet sind, auf den genannten ausfahrbaren Abschnitt (411) zu wirken, um seine Position entlang der genannten ersten Verlaufsrichtung (X) im Verhältnis zu dem genannten Hauptabschnitt (410) zu variieren, zwischen
- mindestens einer eingezogenen Position, in der der genannte Betätigungspunkt (A) und der genannte Anlenkpunkt (C) in einem ersten Abstand (L1) positioniert sind, und der eine erste Dosierkurve (C1) entspricht; und
- mindestens einer ausgefahrenen Position, in der der genannte Betätigungspunkt (A) und der genannte Anlenkpunkt (C) in einem zweiten Abstand (L2) positioniert sind, der größer als der genannte erste Abstand (L1) ist, und der eine zweite Dosierkurve (C2) entspricht.

8. Landwirtschaftliche Maschine zum Verteilen von Behandlungsprodukten auf dem Boden nach Anspruch 7, **dadurch gekennzeichnet, dass** die genannten Einstellmittel einen zweiten Linearantrieb (8) umfassen und der genannte ausfahrbare Abschnitt (411) mittels des genannten zweiten Linearantriebs (8) entlang der genannten ersten Verlaufsrichtung (X) zwischen der genannten eingefahrenen Position und der genannten ausgefahrenen Position bewegt werden kann.

9. Landwirtschaftliche Maschine zum Verteilen von Behandlungsprodukten auf dem Boden nach einem beliebigen der vorangegangenen Ansprüche, **dadurch gekennzeichnet, dass** sie zwei genannte Dosierplatten (4) umfasst, wobei der genannte Behälter (3) mit einer rechten Ausgabeöffnung (31) und einer linken Ausgabeöffnung (31) versehen ist;
wobei die genannte landwirtschaftliche Maschine (1) mit mindestens zwei genannten ersten Linearantrieben (6) ausgestattet ist, die jeweils mechanisch mit einer entsprechenden genannten Dosierplatte (4) verbunden sind, um diese entlang der entsprechenden genannten Versetzungsbahn (S) zu bewegen;
wobei die genannten ersten Linearantriebe (6) voneinander unabhängig sind und auf unterschiedliche Weise betätigt werden können, um unterschiedliche Ausgaben aus der genannten rechten Ausgabeöffnung (31) und der genannten linken Ausgabeöffnung (31) zu gestatten.

10. Landwirtschaftliche Maschine zum Verteilen von Behandlungsprodukten auf dem Boden nach einem beliebigen der vorangegangenen Ansprüche, **dadurch gekennzeichnet, dass** sie eine elektrisch mindestens an den genannten ersten Linearantrieb (6) angeschlossene logische Steuerung umfasst, die darauf ausgelegt ist, den genannten ersten Linearantrieb (6) zu steuern, um den genannten Hebelarm (41) zu betätigen, um den genannten Schließarm (42) entlang der genannten Versetzungsbahn (S) zu bewegen und die Öffnung der genannten Ausgabeöffnung (31) einzustellen.

11. Landwirtschaftliche Maschine zum Verteilen von Behandlungsprodukten auf dem Boden nach Anspruch 10, **dadurch gekennzeichnet, dass** sie mindestens eine Wägezelle umfasst, die elektrisch an die logische Steuerung angeschlossen ist und mit dieser in Datenkommunikation steht und darauf ausgelegt ist, ein Durchflusssignal zu erzeugen, das für den Durchsatz der aus der genannten Ausgabeöffnung (31) ausgegebenen Produkte repräsentativ ist, und das genannte Durchflusssignal an die genannte logische Steuerung zu senden;
wobei die genannte logische Steuerung darauf ausgelegt ist, das genannte Durchflusssignal zu empfangen und mindestens den genannten ersten Linearantrieb (6) zu betätigen, um den Durchsatz von von der genannten Ausgabeöffnung (31) ausgegebenen Produkten zu korrigieren.

## Revendications

1. Machine agricole pour distribuer des produits de traitement sur le sol, comprenant :
- un châssis de support (2) ;
- au moins une cuve (3), fixée audit châssis de support (2) et destinée à contenir des produits devant être distribués sur le sol, ladite cuve (3) étant munie d'au moins une ouverture de délivrance (31) desdits produits devant être distribués ;
- au moins une plaque de dosage (4), qui comprend un bras de levier (41) et un bras de fermeture (42) fixés l'un à l'autre, et qui est articulée mécaniquement sur ladite cuve (3) au niveau d'un point d'articulation (C) interposé entre ledit bras de levier (41) et ledit bras de fermeture (42) ;
ledit bras de fermeture (42) étant mobile par rapport audit point d'articulation (C) le long d'une trajectoire de déplacement (S) entre plusieurs positions opérationnelles dans lesquelles il est placé en fermeture au moins partielle de ladite ouverture de délivrance (31) ;
dans laquelle ladite machine comprend au moins un premier actionneur linéaire (6) qui est articulé sur ledit bras de levier (41) et sur ladite cuve (3), et qui est pourvu d'une première chemise (61) et d'une première tige (62), qui est extensible par rapport à ladite première chemise (61) le long d'une course d'actionnement (U) dans une direction d'actionnement (Z) transversale audit bras de levier (41), afin de déplacer ledit bras de fermeture (42) le long de ladite trajectoire de déplacement (S) ;
dans laquelle ledit premier actionneur linéaire (6) agit sur ledit bras de levier (41) en un point d'actionnement (A) ; dans laquelle ledit premier actionneur linéaire (6) agit sur ledit bras de levier (41) afin de faire tourner ledit bras de dosage (42) autour dudit point d'articulation (C) dans deux sens de rotation opposés ; dans laquelle ledit premier actionneur linéaire (6) peut agir en poussée, pour faire tourner ledit bras de dosage (42) dans un premier sens de rotation, et en traction, pour faire tourner ledit bras de dosage (42) dans un second sens de rotation ;
dans laquelle le rapport (Q) entre le déplacement angulaire dudit bras de fermeture (42) le long de ladite trajectoire de déplacement (S) et la course d'actionnement (U) de la première tige (62) dudit premier actionneur linéaire (6) le long de ladite direction d'actionnement (Z) est inférieur à 0,65°/mm ;
et dans laquelle ledit premier actionneur linéaire (6) est un actionneur électrique dont la sensibilité de course est d'au moins 2 mm.

2. Machine selon la revendication 1, **caractérisée en ce que** la première tige (62) dudit premier actionneur linéaire (6) agit le long de ladite direction d'actionnement (Z) sur une course minimale de 0,5 mm, entraînant une rotation de ladite plaque de dosage (4) inférieure ou égale à 0,3°.

3. Machine selon la revendication 1 ou 2, **caractérisée en ce que** :
- ledit bras de levier (41) s'étend le long d'une première direction d'extension (X), entre une première extrémité (41'), située au niveau dudit point d'articulation (C), et une deuxième extrémité (41") opposée ;
ledit bras de levier (41) étant doté d'une section utile, ayant une première longueur (D1) mesurée entre sa première extrémité (41') et le point d'actionnement (A) ;
- ledit bras de fermeture (42) s'étend le long d'une seconde direction d'extension (Y), sur une seconde longueur (D2), entre une troisième extrémité (42'), située au niveau dudit point d'articulation (C), et une quatrième extrémité (42") opposée à ladite troisième extrémité (42') ;
le rapport entre la première longueur (D1) et la seconde longueur (D2) étant compris entre 1,5 et 0,45.

4. Machine agricole selon la revendication 3, **caractérisée en ce que** ladite première direction d'extension (X) et ladite seconde direction d'extension (Y) sont incidentes l'une par rapport à l'autre et forment un premier angle (α) compris entre 100° et 130° ; et **en ce que**
ladite direction d'actionnement (Z) et ladite première direction d'extension (X) sont incidentes l'une par rapport à l'autre au niveau de ladite deuxième extrémité (41") et forment un second angle (β) compris entre 90° et 130° avec ladite première tige (62) dans une position rétractée, dans laquelle elle est essentiellement entièrement logée dans ladite première chemise (61).

5. Machine agricole pour distribuer des produits de traitement sur le sol selon la revendication 3 ou 4, **caractérisée en ce que** ledit premier actionneur linéaire (6) est articulé sur ledit bras de levier (41) au niveau dudit point d'actionnement (A) ;
ledit point d'actionnement (A) étant mobile le long de la première direction d'extension (X) entre au moins deux positions, pour faire varier la première longueur (D1) de la section utile dudit bras de levier (41).

6. Machine agricole pour distribuer des produits de traitement sur le sol selon la revendication 5, **caractérisée en ce que** ledit bras de levier (41) est pourvu d'au moins deux trous d'accrochage (415) disposés le long de ladite première direction d'extension (X), et ledit premier actionneur linéaire (6) comprend des moyens d'accrochage pour accrocher de manière sélective la tige (62) dudit premier actionneur linéaire (6) à l'un desdits au moins deux trous d'accrochage (415) ;
ledit point d'actionnement (A) étant défini par le trou d'accrochage (415) auquel la tige (62) dudit premier actionneur linéaire (6) est accrochée par lesdits moyens d'accrochage, et étant mobile entre :
- au moins une position rétractée, dans laquelle ledit point d'actionnement (A) et ledit point d'articulation (C) sont placés à une première distance (L1) et à laquelle correspond une première courbe de dosage (C1) ; et
- au moins une position étendue, dans laquelle ledit point d'actionnement (A) et ledit point d'articulation (C) sont placés à une seconde distance (L2), qui est supérieure à ladite première distance (L1), et à laquelle correspond une seconde courbe de dosage (C2).

7. Machine agricole pour distribuer des produits de traitement sur le sol selon la revendication 5, **caractérisée en ce que** ledit bras de levier (41) comprend une partie principale (410) fixe, et une partie extensible (411), sur laquelle est obtenu ledit point d'actionnement (A) et qui est raccordée de manière coulissante à ladite partie principale (410) le long de ladite première direction d'extension (X) ;
ladite machine (1) comprenant des moyens de réglage, raccordés mécaniquement et interposés entre la partie principale (410) et la partie extensible (411) dudit bras de levier (41) et susceptibles d'agir sur ladite partie extensible (411) pour faire varier sa position le long de ladite première direction d'extension (X) par rapport à ladite partie principale (410), entre
- au moins une position rétractée, dans laquelle ledit point d'actionnement (A) et ledit point d'articulation (C) sont placés à une première distance (L1) et à laquelle correspond une première courbe de dosage (C1) ; et
- au moins une position étendue, dans laquelle ledit point d'actionnement (A) et ledit point d'articulation (C) sont placés à une seconde distance (L2), qui est supérieure à ladite première distance (L1), et à laquelle correspond une seconde courbe de dosage (C2).

8. Machine agricole pour distribuer des produits de traitement sur le sol selon la revendication 7, **caractérisée en ce que** lesdits moyens de réglage comprennent un second actionneur linéaire (8) et ladite partie extensible (411) peut être déplacée au moyen dudit second actionneur linéaire (8) le long de ladite première direction d'extension (X) entre ladite position rétractée et ladite position étendue.

9. Machine agricole pour distribuer des produits de traitement sur le sol selon l'une quelconque des revendications précédentes, **caractérisée en ce qu'**elle comprend deux desdites plaques de dosage (4), ladite cuve (3) étant pourvue d'une ouverture de délivrance (31) droite et d'une ouverture de délivrance (31) gauche ;
ladite machine agricole (1) étant équipée d'au moins deux desdits premiers actionneurs linéaires (6), chacun étant raccordé mécaniquement à une plaque de dosage (4) correspondante pour la déplacer le long de ladite trajectoire de déplacement (S) correspondante ;
dans laquelle lesdits premiers actionneurs linéaires (6) sont indépendants les uns des autres et peuvent être actionnés différemment pour permettre différentes délivrances à partir de ladite ouverture de délivrance (31) droite et de ladite ouverture de délivrance (31) gauche.

10. Machine agricole pour distribuer des produits de traitement sur le sol selon l'une quelconque des revendications précédentes, **caractérisée en ce qu'**elle comprend une unité de commande logique connectée électriquement à au moins ledit premier actionneur linéaire (6) et configurée pour commander ledit premier actionneur linéaire (6) afin d'actionner ledit bras de levier (41) pour déplacer ledit bras de fermeture (42) le long de ladite trajectoire de déplacement (S) et régler l'ouverture de ladite ouverture de délivrance (31).

11. Machine agricole pour distribuer des produits de traitement sur le sol selon la revendication 10, **caractérisée en ce qu'**elle comprend au moins une cellule de charge, connectée électriquement et en communication de données avec ladite unité de commande logique et prévue pour générer un signal de débit, représentatif du débit de produits délivrés par ladite ouverture de délivrance (31) et pour envoyer ledit signal de débit à ladite unité de commande logique ;
ladite unité de commande logique étant prévue pour recevoir ledit signal de débit et actionner au moins ledit premier actionneur linéaire (6) afin de corriger le débit de produits délivrés par ladite ouverture de délivrance (31).
